# EUROPÄISCHE PATENTANMELDUNG

(11) **EP 4 656 375 A1**
(43) Veröffentlichungstag der Anmeldung: **03.12.2025**
(21) Anmeldenummer: 25175992.4
(22) Anmeldetag: 13.05.2025
(51) Int. Cl.: B32B 5/02

(54) **GEOTEXTILER LAGENVERBUND**

(30) Priorität: 28.05.2024 DE 102024114963
(71) Anmelder: Huesker Synthetic GmbH, 48712 Gescher (DE)
(72) Erfinder: SEIDEL, Nico, 48249 Dülmen (DE); RICHELS, Heinz-Georg, 46342 Velen (DE)
(74) Vertreter: Pelster Behrends Patentanwälte PartG mbB

(57) **Zusammenfassung**

Die Erfindung betrifft einen geotextilen Lagenverbund (10), insbesondere zum Abdichten von Geländeabschnitten und/oder zur Schadstofffiltration mit zumindest einer Fasern umfassenden Außenschicht (14).

## Beschreibung

Die Erfindung betrifft einen geotextilen Lagenverbund, insbesondere zum Abdichten von Geländeabschnitten und/oder zur Schadstofffiltration mit zumindest einer Fasern umfassenden Außenschicht.

Ferner betrifft die Erfindung eine Anlage zum Herstellen eines geotextilen Lagenverbundes, mit einer Bereitstellungseinheit zum Bereitstellen einer Fasern umfassenden Schicht oder eines Lagenverbundes mit zumindest einer Fasern umfassenden Außenschicht.

Darüber hinaus betrifft die Erfindung ein Verfahren zum Herstellen eines geotextilen Lagenverbundes, mit dem Schritt: Bereitstellen einer Fasern umfassenden Schicht oder eines Lagenverbundes mit zumindest einer Fasern umfassenden Außenschicht.

Im Stand der Technik sind geotextile Lagenverbunde, wie beispielsweise Tondichtungsbahnen, bekannt. Solche geotextilen Lagenverbunde werden verwendet, um Geländeabschnitte abzudichten, insbesondere im Deponiebau, im Bereich des Grundwasserschutzes, der Altlastensanierung und dem Wasserbau. Werden solche geotextilen Lagenverbunde bei steilen Geländeabschnitten verwendet, so besteht die Gefahr des Abrutschens des geotextilen Lagenverbundes oder des auf dem geotextilen Lagenverbund aufliegenden Materials. Um ein solches Abrutschen zu verhindern, sind im Stand der Technik geotextile Lagenverbunde bekannt, deren Oberfläche mit einer Zusatzschicht beschichtet sind, welche beispielsweise Bitumen und/oder Blähschiefer umfasst. Diese Zusatzschicht erhöht beispielsweise die Reibung zwischen dem geotextilen Lagenverbund und einem Geländeabschnitt. Alternativ und/oder zusätzlich kann diese Zusatzschicht die Reibung zwischen dem geotextilen Lagenverbund und auf dem geotextilen Lagenverbund aufliegenden Materials erhöhen.

Im Stand der Technik ist kein geotextiler Lagenverbund bekannt, bei welchem zur Erhöhung der Reibung auf eine zusätzliche Schicht verzichtet werden kann. Es ist im Stand der Technik kein geotextiler Lagenverbund bekannt, bei welchem die Außenschicht derart verändert wird, dass diese eine erhöhte Reibung aufweist im Vergleich zu der unbehandelten Außenschicht. Die Aufgabe der Erfindung besteht darin, die in diesem Zusammenhang im Stand der Technik bekannten Probleme zumindest teilweise zu überwinden.

Die Aufgabe wird gelöst durch einen geotextilen Lagenverbund der eingangs genannten Art, wobei die zumindest eine Außenschicht durch thermisch behandelte Fasern eine Oberflächenstruktur mit erhöhter Reibwirkung aufweist.

Dadurch, dass die Außenschicht des geotextilen Lagenverbundes durch thermisch behandelte Fasern eine Oberflächenstruktur mit erhöhter Reibwirkung aufweist, wird ein Abrutschen des geotextilen Lagenverbundes, beispielsweise von einem geneigten Geländeabschnitt, oder ein Abrutschen von auf dem geotextilen Lagenverbund aufliegenden Materials verhindert. Das Auftragen einer Zusatzschicht mit erhöhter Reibwirkung ist nicht erforderlich, wodurch der geotextile Lagenverbund mit geringerem Aufwand, wirtschaftlicher und materialsparender hergestellt werden kann.

Der geotextile Lagenverbund kann geotextile Lagen oder Geländeabschnitte schützen und/oder geotextile Lagen oder Geländeabschnitte ballastieren. Durch das Ballastieren kann das Aufschwemmen von geotextilen Lagen oder Geländeabschnitten verhindert werden. Der geotextile Lagenverbund kann empfindliche Oberflächen schützen. Der geotextile Lagenverbund kann Kunststoffdichtungsbahnen oder Gelände schützen. Der geotextile Lagenverbund kann Geländeabschnitte schützen. Der geotextile Lagenverbund befindet sich zwischen einem Geländeabschnitt und einem Trägermedium. Das auf dem geotextilen Lagenverbund aufliegende Trägermedium kann beispielsweise Deponiegüter, insbesondere Abfall, umfassen. Das Trägermedium kann schafstoffbelastet sein. Bei der Schadstofffiltration durch den geotextilen Lagenverbund erfolgt eine Aufnahme von Stoffen aus dem Trägermedium, insbesondere von Flüssigkeiten oder Gasen. Die aus dem Trägermedium austretenden Stoffe umfassen insbesondere Sickerwasser, Porenwasser, Bodenluft, Deponiegas und/oder Grundwasser. Durch die thermische Behandlung der Fasern kann eine Oberflächenstruktur mit erhöhter Reibwirkung in effizienter und umweltfreundlicher Weise erzeugt werden. Es kann sich um Naturfasern und/oder Chemiefasern handeln. Der geotextile Lagenverbund kann beispielsweise eine Matte oder ein Gewirk sein. Die thermische Behandlung ist vorzugsweise eine Wärmbehandlung. Reibwirkung entsteht zwischen zwei Kontaktflächen. Es entsteht eine Reibwirkung zwischen dem geotextilen Lagenverbund und einem Geländeabschnitt. Es kann insbesondere eine Reibwirkung zwischen der zumindest einen Fasern umfassenden Außenschicht des geotextilen Lagenverbundes und einem Geländeabschnitt entstehen. Es kann eine Reibwirkung der auf einem Geokunststoff, insbesondere einem Geogitter, einem Vliesstoff oder einer Geomembran, aufliegenden Fasern umfassenden Außenschicht des geotextilen Lagenverbundes entstehen. Eine Geomembran kann eine Dichtungsbahn umfassen. Eine Geomembran kann eine fabrikfertige Struktur aus geosynthetischen Materialien in Form einer Bahn umfassen, wobei die fabrikfertige Struktur eine Dichtungsfunktion aufweist, welche insbesondere durch Polymere erfüllt wird. Eine Geomembran kann eine geosynthetische Tondichtungsbarriere umfassen. Die geosynthetische Tondichtungsbarriere kann eine fabrikfertige Struktur aus geosynthetischen Materialien in Form einer Bahn aufweisen, wobei die fabrikfertige Struktur eine Dichtungsfunktion aufweist, welche insbesondere durch Ton erfüllt wird. Durch eine thermische Behandlung der Fasern weist die Oberflächenstruktur eine erhöhte Reibwirkung gegenüber der Reibwirkung der thermisch unbehandelten Oberflächenstruktur auf. Alternativ oder zusätzlich zu der thermischen Behandlung können die Fasern der Außenschicht auch chemisch behandelt werden. Die erhöhte Reibwirkung kann durch eine erhöhte Haftreibung erzielt werden. Eine raue Oberfläche bewirkt eine erhöhte Reibwirkung. Bei zu geringer Reibwirkung kann der geotextile Lagenverbund bei Verwendung an einem geneigten Geländeabschnitt und/oder an einer Böschung abrutschen. Bei zu geringer Reibwirkung kann der geotextile Lagenverbund bei Aufliegen auf einem Geokunststoff, insbesondere einem Geogitter, einem Geogewebe, einem Vliesstoff und/oder einem Geovliesstoff abrutschen. Bei zu geringerer Reibwirkung kann der geotextile Lagenverbund bei Aufliegen auf geosynthetischen Materialien, wie beispielsweise Kunststoffdichtungsbahnen und/oder Geomembranen, abrutschen. Die Gefahr des Abrutschens besteht insbesondere bei steilen Geländeabschnitten. Durch erhöhte Reibwirkung entsteht ein erhöhter Reibungswinkel. Der Geländeabschnitt kann unterschiedliche Untergründe umfassen, wie beispielsweise Gestein, Felsen und/oder Erdreich. Die unterschiedlichen Untergründe des Geländeabschnitts weisen unterschiedliche intrinsische Reibwirkung mit der Oberfläche des aufliegenden geotextilen Lagenverbundes auf.

Das Abdichten eines Geländeabschnittes ist im Deponiebau für eine Verbesserung der geologischen Barriere von Bedeutung, um die Schadstoffbelastung der Umwelt, insbesondere des Erdreichs und Grundwassers, gering zu halten. Es können Geländeabschnitte von Bahnanlagen abgedichtet werden. Es können Geländeabschnitte im Wasserbau, insbesondere für den Kanalbau, Dammbau, Deichbau und für den Bau von Entwässerungsgräben, abgedichtet werden. Es können Geländeabschnitte für den Bau von Regenrückhaltebecken, Landschaftsbauwerken, Flugplätzen und den Bau von Straßen und/oder Bahnanlagen in Wasserschutzgebieten abgedichtet werden. Es können Geländeabschnitte für die Altlastensanierung abgedichtet werden. Durch den Einsatz des geotextilen Lagenverbundes kann zum Schutz des Grundwassers vor Verunreinigung eine Filtration von verunreinigtem und/oder belastetem Wasser erfolgen. Die erhöhte Reibwirkung verhindert das Abrutschen bei Neigungen von zumindest 1:4, vorzugsweise zumindest 1:3, besonders bevorzugt zumindest 1:1,5.

In einer vorteilhaften Weiterbildung des erfindungsgemäßen geotextilen Lagenverbundes sind die thermisch behandelten Fasern der zumindest einen Außenschicht aufgeschmolzen und/oder angeschmolzen. Beim Aufschmelzen und/oder Anschmelzen wird, insbesondere durch Wärmezufuhr, ein Stoff zumindest stellenweise von dem festen in den flüssigen Aggregatzustand überführt. Beim Aufschmelzen und/oder Anschmelzen werden die Fasern zumindest stellenweise verflüssigt und ändern dadurch ihre Struktur, Form und/oder Ausrichtung. Beim Aufschmelzen und/oder Anschmelzen werden die Fasern verkürzt. Die aufgeschmolzenen und/oder angeschmolzenen Fasern sind verfestigt und liegen wieder im festen Zustand vor. Überstehende Fasern werden aufgeschmolzen und/oder angeschmolzen und schrumpfen. Durch das Aufschmelzen und/oder Anschmelzen wird die Haftung zwischen den Fasern untereinander erhöht. Beim Aufschmelzen und/oder Anschmelzen wird die Glasübergangstemperatur der Fasern überschritten, sodass die Fasern schrumpfen. Das Aufschmelzen und/oder Anschmelzen der Fasern führt nach einem Abkühlen und/oder Erstarren zu einer rauerer und/oder härterer Oberfläche der Fasern im Vergleich zu der Oberfläche der Fasern vor dem Aufschmelzen und/oder Anschmelzen. Durch das Schrumpfen der Fasern tritt eine geometrische Veränderung der Fasern auf.

In einer bevorzugten Weiterbildung der erfindungsgemäßen des geotextilen Lagenverbundes sind die thermisch behandelten Fasern der Außenschicht mittels Infrarotlicht thermisch behandelt. Infrarotlicht kann mithilfe eines Infrafortstrahlers erzeugt werden. Der Vorteil eines Infrarotstrahlers ist, dass Fasern einer dünnen Schicht - insbesondere an der Oberfläche - thermisch behandelt werden können. Infrarotlicht kann kontrolliert in eine beabsichtigte Schichttiefe des Fasermaterials eindringen. Die mittels der Infrarotlicht erzeugte Oberflächentemperatur auf der Außenschicht liegt vorzugsweise in einem Bereich zwischen 80°C und 900°C, vorzugsweise in einem Bereich zwischen 100°C und 700°C, insbesondere in einem Bereich zwischen 150°C und 500°C. Die thermische Behandlung der Fasern kann mittels Heißluft erfolgen. Heißluft wird künstlich durch eine Heißlufteinrichtung erzeugt, welche eine Heizeinrichtung und eine Gebläseeinrichtung umfasst. Die Heißluft kann eine Temperatur in einem Bereich zwischen 50°C und 900°C, vorzugsweise in einem Bereich zwischen 100°C und 700°C, insbesondere in einem Bereich zwischen 200°C und 500°C, aufweisen. Die thermische Behandlung der Fasern kann durch eine Flamme, wie beispielsweise Sengen, erfolgen. Die Wellenlänge oder Intensität des Infrarotstrahlers kann verändert werden, wodurch die Strahlungsenergie kontrolliert variiert werden kann. Eine solche Anpassung ist zweckmäßig, um Fasern aus unterschiedlichen Materialien auf geeignete Weise thermisch zu behandeln. Die Dauer der thermischen Behandlung mittels Infrarotstrahler kann eingestellt werden. Es kann eine längere Bestrahlung erfolgen oder es können kurze Pulse erfolgen. Fasern können durch Anliegen an einer heißen Walze, insbesondere einer Kalanderwalze, aufgeschmolzen und/oder angeschmolzen werden. Die Verwendung einer Kalanderwalze ist vorteilhaft, da die thermisch zu behandelnden Fasern auf einer großen Fläche, vorzugsweise über die gesamte Breite des Lagenverbundes, thermisch behandelt werden können. Eine heiße Walze mit strukturierter Oberfläche ist zweckmäßig, um eine erhöhte Reibwirkung zu erzielen. Bei einer heißen Walze mit glatter Oberfläche würden die Fasern gegebenenfalls plattgedrückt und erhielten daher aufgrund unbeabsichtigter Wärmeeinwirkung nicht die beabsichtigte Reibwirkung. Die thermische Behandlung mit Infrarotstrahler und/oder Kalanderwalze kann mit einem Herstellungsschritt des geotextilen Lagenverbundes, insbesondere vor oder nach dem Verbindungsprozess, wie beispielsweise Nähwirken, insbesondere nach dem Malimo-Verfahren, oder Vernadeln, kombiniert werden.

In einer Weiterbildung des erfindungsgemäßen geotextilen Lagenverbundes weist die Außenschicht über zumindest 50%, vorzugsweise über zumindest 90%, der Fläche durch thermisch behandelte Fasern eine Oberflächenstruktur mit erhöhter Reibwirkung auf. Bei der Verwendung eines Infrarotstrahlers für die thermische Behandlung der Fasern kann eine thermische Behandlung gezielt stellenweise erfolgen. Eine möglichst hohe Reibwirkung wird durch eine großflächige thermische Behandlung ermöglicht. Eine großflächige thermische Behandlung der Oberfläche kann durch eine heiße Kalanderwalze erfolgen.

In einer weiteren bevorzugten Ausführungsform umfasst der erfindungsgemäße geotextile Lagenverbund zumindest zwei Fasern umfassende Außenschichten, wobei die zumindest zwei Außenschichten jeweils durch thermisch behandelte Fasern eine Oberflächenstruktur mit erhöhter Reibwirkung aufweisen. Der geotextile Lagenverbund umfasst eine obere Außenschicht und eine gegenüber liegende untere Außenschicht. Die untere Außenschicht liegt auf dem Untergrund auf. Ein Abrutschen des geotextilen Lagenverbundes wird durch eine erhöhte Reibwirkung verhindert. Auf der oberen Außenschicht liegt Material, wie beispielsweise Bodenmaterialien, insbesondere Sande, Tone, Schluffe, organische Böden und/oder Mischungen, auf. Auf der oberen Außenschicht können Geokunststoffe, wie beispielsweise Geogitter, Geogewebe, Geovliesstoffe und/oder geosynthetische Stoffe, insbesondere Kunststoffdichtungsbahnen und/oder Geomembranen, auf. Ein Abrutschen des auf der oberen Außenschicht des geotextilen Lagenverbundes aufliegenden Materials wird durch eine erhöhte Reibwirkung verhindert. In Abhängigkeit der Beschaffenheit des Untergrunds beziehungsweise Materials, auf dem der geotextile Langeverbund aufliegt beziehungsweise des Materials, das auf dem geotextilen Lagenverbund aufliegt, ist eine erhöhte Reibwirkung teilweise nur für die obere Außenschicht oder nur für die untere Außenschicht notwendig. Die obere Außenschicht kann durch thermisch behandelte Fasern eine Oberflächenstruktur mit erhöhter Reibwirkung aufweisen, während die untere Außenschicht keine Oberflächenstruktur mit erhöhter Reibwirkung durch thermisch behandelte Fasern aufweist. Die untere Außenschicht kann durch thermisch behandelte Fasern eine Oberflächenstruktur mit erhöhter Reibwirkung aufweisen, während die obere Außenschicht keine Oberflächenstruktur mit erhöhter Reibwirkung durch thermisch behandelte Fasern aufweist. Der geotextile Lagenverbund kann aus insgesamt drei Lagen ausgebildet sein. Diese drei Lagen des geotextilen Lagenverbunds umfassen die obere Außenschicht, die untere Außenschicht und eine Materialschicht.

In einer anderen Ausführungsform umfasst der erfindungsgemäße geotextile Lagenverbund eine Decklage und eine Trägerlage, wobei zwischen der Decklage und der Trägerlage eine, insbesondere rieselfähiges, Füllmaterial umfassende Materialschicht angeordnet ist. Die Trägerlage und/oder Decklage weist eine Schichtdicke von zumindest 0,2 cm, vorzugsweise zumindest 0,4 cm, besonders bevorzugt zumindest 0,8 cm auf. Die Trägerlage und/oder Decklage kann Gewebe und/oder Vliesstoff umfassen oder als Gewebe und/oder Vliesstoff ausgebildet sein. Die Trägerlage befindet sich vorzugsweise unterhalb der Materialschicht und ist vorzugsweise an der dem Gelände zugewandten Seite orientiert. Die Decklage befindet sich vorzugsweise oberhalb der Materialschicht und ist vorzugsweise an der dem Gelände abgewandten Seite orientiert. Das Füllmaterial kann aus einem Tonmineral, beispielsweise Bentonit, insbesondere Calcium- und/oder Natriumbentonit, ausgebildet sein. Das Füllmaterial kann Modifikationen aufweisen und/oder aus modifiziertem Bentonit, wie beispielsweise Polymerbentonit, ausgebildet sein. Das Füllmaterial kann Sand und/oder Fasermaterial und/oder einen oder mehrere Leichtfüllstoffe und/oder einen oder mehrere Bindemittel beziehungsweise Aktivstoffe umfassen. Die Aktivstoffe können Schwermetallbinder, Aktivkohle und/oder Ionentauscher umfassen. Das Füllmaterial kann ein rieselfähiges und/oder pastöses Material sein oder umfassen. Das Füllmaterial ist im trockenen Zustand rieselfähig. Das Bentonit kann rieselfähig oder pulverförmig oder granular oder pastös sein. Das Bentonit ist im trockenen Zustand rieselfähig. Ein Quellen und/oder die Aufnahme von Wasser durch Bentonit erzeugt eine abdichtende Schicht. Das Füllmaterial kann eine Filtrationseigenschaft aufweisen, insbesondere zum Filtern von verunreinigtem und/oder belastetem Wasser. Durch die Filtrationseigenschaft des Füllmaterials kann das Grundwasser geschont werden. Die Füllmaterial umfassende Materialschicht weist eine Schichtdicke von zumindest 0,2 cm, vorzugsweise 0,4 cm, besonders bevorzugt 0,6 cm auf. Die zumindest eine Außenschicht, welche durch thermisch behandelte Fasern eine Oberflächenstruktur mit erhöhter Reibwirkung aufweist, kann mit der Decklage und/oder der Trägerlage vernadelt und/oder vernäht sein.

Der erfindungsgemäße geotextile Lagenverbund wird dadurch vorteilhaft weitergebildet, dass zumindest eine Außenschicht, welche durch thermisch behandelte Fasern eine Oberflächenstruktur mit erhöhter Reibwirkung aufweist, durch die Decklage gebildet wird und/oder zumindest eine Außenschicht, welche durch thermisch behandelte Fasern eine Oberflächenstruktur mit erhöhter Reibwirkung aufweist, durch die Trägerlage gebildet wird. Dadurch, dass die Außenschicht durch die Decklage gebildet wird, entfällt auf der Decklagenseite das Aufbringen einer separaten Außenschicht zur Erhöhung der Reibwirkung. Dadurch, dass die Außenschicht durch die Trägerlage gebildet wird, entfällt auf der Trägerlagenseite das Aufbringen einer separaten Außenschicht zur Erhöhung der Reibwirkung.

Der erfindungsgemäße geotextile Lagenverbund wird ferner dadurch vorteilhaft weitergebildet, dass zumindest eine Außenschicht, welche durch thermisch behandelte Fasern eine Oberflächenstruktur mit erhöhter Reibwirkung aufweist, durch eine auf der der Materialschicht abgewandten Seite der Decklage verlaufende decklagenseitige Zusatzschicht gebildet wird und/oder zumindest eine Außenschicht, welche durch thermisch behandelte Fasern eine Oberflächenstruktur mit erhöhter Reibwirkung aufweist, durch eine auf der der Materialschicht abgewandten Seite der Trägerlage verlaufende trägerlagenseitige Zusatzschicht gebildet wird. Die trägerlagenseitige Zusatzschicht kann Chemiefasern umfassen. Die Trägerlage und/oder Decklage kann Gewebe und/oder Vliesstoff umfassen oder als Gewebe und/oder Vliesstoff ausgebildet sein. Die decklagenseitige Zusatzschicht und/oder die trägerlagenseitige Zusatzschicht kann Gewebe und/oder Vliesstoff umfassen oder als Gewebe und/oder Vliesstoff ausgebildet sein. Die decklagenseitige Zusatzschicht liegt vorzugsweise unmittelbar auf der Decklage auf. Die trägerlagenseitige Zusatzschicht liegt vorzugsweise unmittelbar auf der Trägerlage auf. Die decklagenseitige Zusatzschicht und/oder die trägerlagenseitige Zusatzschicht kann aus einem anderen Fasern umfassenden Material gefertigt sein als die Trägerlage und/oder Decklage. Die decklagenseitige Zusatzschicht ist mit der Decklage vorzugsweise vernadelt und/oder vernäht. Die trägerlagenseitige Zusatzschicht ist mit der Trägerlage vorzugsweise vernadelt und/oder vernäht. Die Decklage ist mit der Trägerlage vorzugsweise vernadelt und/oder vernäht. Die decklagenseitige Zusatzschicht ist mit der Decklage vorzugsweise vernadelt und/oder vernäht. Die decklagenseitige Zusatzschicht kann mit der Decklage verklebt sein. Die trägerlagenseitige Zusatzschicht kann mit der Trägerlage verklebt sein. Die Zusatzschicht kann dünner als die Trägerlage und/oder Decklage und/oder Materialschicht sein.

In einer vorteilhaften Weiterbildung des geotextilen Lagenverbundes umfassen die Decklage und/oder die Trägerlage Fasern, wobei die Fasern der Decklage und/oder der Trägerlage länger sind als die Fasern der Zusatzschicht. Die Fasern weisen eine erste und zweite Faserlänge auf. Die erste Faserlänge und die zweite Faserlänge liegen beispielsweise in einem Bereich zwischen 7 cm und 12 cm, vorzugsweise zwischen 8 cm und 10 cm. Die Fasern können eine dritte Faserlänge aufweisen. Die dritte Faserlänge liegt beispielsweise in einem Bereich zwischen 2,5 cm und 6,5 cm, vorzugsweise zwischen 3,5 cm und 5,5 cm.

In einer weiteren bevorzugten Ausführungsform umfasst der erfindungsgemäße geotextile Lagenverbund eine Zwischenschicht, welche zwischen der Materialschicht und der Decklage oder zwischen der Materialschicht und der Trägerlage angeordnet ist. Die Zwischenschicht kann eine Vliesschicht, insbesondere eine Vliesstoffschicht, sein. Die Schichtdicke der Zwischenschicht ist geringer als die Schichtdicke der Materialschicht.

Die der Erfindung zugrunde liegende Ausgabe wird ferner durch einen erfindungsgemäßen geotextilen Lagenverbund gelöst, wobei die zumindest eine Außenschicht einen Vliesstoff umfasst oder als Vliesstoff ausgebildet ist. Vliesstoffe sind kostengünstig im Vergleich zu gewebten Stoffen. Vliesstoffe gibt es in verschiedenen Gewichten, beziehungsweise Grammaturen, Stärken und Zusammensetzungen

Die der Erfindung zugrunde liegende Ausgabe wird darüber hinaus durch einen erfindungsgemäßen geotextilen Lagenverbund gelöst, wobei die Decklage mit der Trägerlage vernadelt ist und/oder die Decklage mit zumindest einer Zusatzschicht vernadelt ist und/oder die Trägerlage mit zumindest einer Zusatzschicht vernadelt ist und/oder die Decklage mit zumindest einer Zwischenschicht vernadelt ist und/oder die Trägerlage mit zumindest einer Zwischenschicht vernadelt ist. Das Vernadeln umfasst eine kraftschlüssige und/oder formschlüssige Verbindung. Die kraftschlüssige Verbindung wird durch Reibung zwischen den Fasern erzeugt. Die formschlüssige Verbindung wird durch Verschlingung der Fasern erzeugt. Beim Vernadeln erfolgt die Verdichtung der Fasern in Faserbündeln durch Reibung und Verschlingung. Anders als beim Vernähen wird beim Vernadeln kein zusätzliches Material, insbesondere Fäden, benötigt. Es kann flächig oder punktweise, beziehungsweise stellenweise, vernadelt werden. Flächige Vernadelung ermöglicht eine hohe Stabilität der Verbindung.

Des Weiteren wird die der Erfindung zugrunde liegende Aufgabe durch einen geotextilen Lagenverbund gelöst, wobei die Decklage mit der Trägerlage vernäht ist und/oder die Decklage mit zumindest einer Zusatzschicht vernäht ist und/oder die Trägerlage mit zumindest einer Zusatzschicht vernäht ist und/oder die Decklage mit zumindest einer Zwischenschicht vernäht ist und/oder die Trägerlage mit zumindest einer Zwischenschicht vernäht ist. Das Vernähen umfasst eine kraftschlüssige Verbindung. Das Vernähen kann über die Breite des Lagenverbundes erfolgen. Die Nähte können äquidistant in Maschinenrichtung, also quer zur Breite des Lagenverbundes, angeordnet sein. Die Nähte sind in einem Abstand von zumindest 15 mm, vorzugsweise zumindest 25 mm, besonders bevorzugt zumindest 35 mm angeordnet.

Darüber hinaus wird der erfindungsgemäße geotextile Lagenverbund dadurch vorteilhaft weitergebildet, dass zumindest zwei Schichten ausgewählt aus der Gruppe bestehend aus: Trägerlage, Decklage, Materialschicht, Zusatzschicht, Zwischenlage unterschiedliche Schichtdicken aufweisen. Die Materialschicht weist eine höhere Schichtdicke als die Trägerlage auf. Die Materialschicht weist eine höhere Schichtdicke als die Decklage auf. Die Materialschicht weist eine höhere Schichtdicke als die Zusatzschicht auf. Die Materialschicht weist eine höhere Schichtdicke als die Zwischenlage auf. Die Trägerlage und Decklage können die gleiche Schichtdicke aufweisen oder die Trägerlage weist eine höhere Schichtdicke als die Decklage auf oder die Decklage weist eine höhere Schichtdicke als die Trägerlage auf. Die Zusatzschicht kann eine geringere Schichtdicke als die Zwischenlage aufweisen. Die Zusatzschicht kann eine höhere Schichtdicke als die Zwischenlage aufweisen.

Die der Erfindung zugrunde liegende Aufgabe wird ferner durch eine erfindungsgemäße Anlage der eingangs genannten Art gelöst, wobei die erfindungsgemäße Anlage eine thermische Behandlungseinrichtung umfasst, welche dazu eingerichtet ist, Fasern der Fasern umfassenden Schicht oder Fasern der zumindest einen Fasern umfassenden Außenschicht des Lagenverbundes zur Erzeugung einer Oberflächenstruktur mit erhöhter Reibwirkung thermisch zu behandeln. Mit der erfindungsgemäßen Anlage wird vorzugsweise ein geotextiler Lagenverbund nach einer der vorstehend beschriebenen Ausführungsformen hergestellt. Hinsichtlich der Vorteile und Modifikationen der erfindungsgemäßen Anlage wird somit auf die Vorteile und Modifikationen des erfindungsgemäßen geotextilen Lagenverbundes verwiesen. Die Bereitstellungseinheit kann eine Förderanlage umfassen, welche die Schicht oder den Lagenverbund bereitstellt. Die Bereitstellungseinheit kann eine Vliesherstellungseinheit oder eine Vliesstoffherstellungseinheit sein. Die Bereitstellungseinheit kann eine Wirkmaschine, insbesondere eine Nähwirkmaschine, sein. Die Nähwirkmaschine kann insbesondere nach dem Malimo-Verfahren vernähen. Die thermische Behandlungseinrichtung kann dazu eingerichtet sein, die Fasern bei unterschiedlichen Temperaturen thermisch zu behandeln. Je nach Material der Fasern sind unterschiedliche Temperaturen notwendig, um die beabsichtigte Reibwirkung zu erzielen.

In einer vorteilhaften Weiterbildung der Anlage ist die thermische Behandlungseinrichtung dazu eingerichtet, Fasern der Fasern umfassenden Schicht oder Fasern der zumindest einen Fasern umfassenden Außenschicht des Lagenverbundes aufzuschmelzen und/oder anzuschmelzen. Je nach Material und Beschaffenheit der Fasern benötigen manche Fasern eine höhere, manche Fasern eine niedrigere Temperatur, um aufzuschmelzen und/oder anzuschmelzen. Die von der thermischen Behandlungseinrichtung erzeugte Temperatur lässt sich daher, insbesondere über eine elektronische Steuerungseinrichtung, anpassen.

In einer weiteren bevorzugten Ausführungsform der erfindungsgemäßen Anlage umfasst die thermische Behandlungseinrichtung eine Infrarotlichtquelle zur Erzeugung von Infrarotlicht. Es kann sich um eine Infrarotlichtquelle mit kontinuierlichem Infrarotlicht oder mit gepulstem Infrarotlicht handeln. Es kann sich um eine Infrarotlichtquelle handeln, bei welcher sich die Dauer der Infrarotlichtbestrahlung variieren lässt, damit die thermische Behandlung auf das zu behandelnde Fasermaterial angepasst werden kann. Es kann sich um eine Infrarotlichtquelle handeln, bei welcher sich die Wellenlänge des Infrarotlichts variieren lässt, damit die thermische Behandlung auf das zu behandelnde Fasermaterial angepasst werden kann. Die thermische Behandlungseinrichtung kann eine heiße Kalanderwalze und/oder eine Heißlufteinrichtung umfassen.

Die der Erfindung zugrunde liegende Aufgabe wird ferner durch ein erfindungsgemäßes Verfahren der eingangs genannten Art gelöst, wobei das erfindungsgemäße Verfahren den folgenden Schritt umfasst: thermisches Behandeln der Fasern der Fasern umfassenden Schicht oder der Fasern der zumindest einen Fasern umfassenden Außenschicht des Lagenverbundes zur Erzeugung einer Oberflächenstruktur mit erhöhter Reibwirkung. Mit dem erfindungsgemäßen Verfahren wird vorzugsweise ein geotextiler Lagenverbund nach einer der vorstehend beschriebenen Ausführungsformen hergestellt. Hinsichtlich der Vorteile und Modifikationen des erfindungsgemäßen Verfahrens wird somit auf die Vorteile und Modifikationen des erfindungsgemäßen geotextilen Lagenverbundes verwiesen. Das Bereitstellen der Fasern umfassenden Schicht oder des Lagenverbundes mit zumindest einer Fasern umfassenden Außenschicht erfolgt vorzugsweise mittels einer Bereitstellungseinheit einer Anlage zum Herstellen eines geotextilen Lagenverbundes. Das Bereitstellen kann beispielsweise über eine als Förderanlage ausgebildete Bereitstellungseinheit erfolgen. Das Bereitstellen kann beispielsweise über eine als Vliesherstellungseinheit oder als Vliesstoffherstellungseinheit oder als Wirkmaschine ausgebildete Bereitstellungseinheit erfolgen. Das thermische Behandeln der Fasern der Fasern umfassenden Schicht oder der Fasern der zumindest einen Fasern umfassenden Außenschicht des Lagenverbundes erfolgt vorzugsweise mittels einer thermischen Behandlungseinrichtung einer Anlage zum Herstellen eines geotextilen Lagenverbundes.

In einer besonders bevorzugten Ausführungsform des erfindungsgemäßen Verfahrens werden die Fasern der Fasern umfassenden Schicht oder die Fasern der zumindest einen Fasern umfassenden Außenschicht des Lagenverbundes durch das thermische Behandeln aufgeschmolzen und/oder angeschmolzen. Die Fasern der Fasern umfassenden Schicht oder die Fasern der zumindest einen Fasern umfassenden Außenschicht können durch chemische Behandlung aufgeschmolzen und/oder angeschmolzen werden. Es können Naturfasern und/oder Chemiefasern thermisch behandelt werden. Bei den aufgeschmolzenen und/oder angeschmolzenen Fasern kann es sich um Chemiefasern handeln.

In einer weiteren bevorzugten Ausführungsform des erfindungsgemäßen Verfahrens erfolgt das thermische Behandeln der Fasern der Fasern umfassenden Schicht oder der Fasern der zumindest einen Fasern umfassenden Außenschicht des Lagenverbundes mittels Infrarotlicht. Das thermische Behandeln mittels Infrarotlicht kann stellenweise oder flächig erfolgen. Das thermische Behandeln kann über eine Heißlufteinrichtung erfolgen.

In einer anderen bevorzugten Ausführungsform des erfindungsgemäßen Verfahrens erfolgt ein Vernadeln von zumindest zwei Schichten des Lagenverbundes miteinander und/oder ein Vernähen von zumindest zwei Schichten des Lagenverbundes miteinander. Das Vernadeln kann durch eine Vernadelungseinheit erfolgen. Die Vernadelungseinheit kann Nadeln umfassen. Das Vernadeln kann stellenweise oder flächig erfolgen. Das Vernähen kann durch eine Vernähungseinheit erfolgen. Das Vernähen kann stellenweise oder flächig erfolgen. Die Vernähungseinheit kann Nadeln umfassen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen geotextilen Lagenverbundes in einer schematischen Seitansicht;
- Fig. 2: ein weiteres Ausführungsbeispiel des erfindungsgemäßen geotextilen Lagenverbundes in einer schematischen Seitansicht;
- Fig. 3: ein weiteres Ausführungsbeispiel des erfindungsgemäßen geotextilen Lagenverbundes in einer schematischen Perspektivdarstellung;
- Fig. 4: ein weiteres Ausführungsbeispiel des erfindungsgemäßen geotextilen Lagenverbundes in einer schematischen Perspektivdarstellung;
- Fig. 5: ein weiteres Ausführungsbeispiel des erfindungsgemäßen geotextilen Lagenverbundes in einer schematischen Seitansicht;
- Fig. 6: ein weiteres Ausführungsbeispiel des erfindungsgemäßen geotextilen Lagenverbundes in einer anderen schematischen Seitansicht;
- Fig. 7: ein Ausführungsbeispiel einer erfindungsgemäßen Anlage zum Herstellen eines geotextilen Lagenverbundes in einer schematischen Seitansicht;
- Fig. 8: ein weiteres Ausführungsbeispiel einer erfindungsgemäßen Anlage zum Herstellen eines geotextilen Lagenverbundes in einer schematischen Seitansicht; und
- Fig. 9: einen Teilbereich einer erfindungsgemäßen Anlage zum Herstellen eines geotextilen Lagenverbundes in einer schematischen Seitansicht.

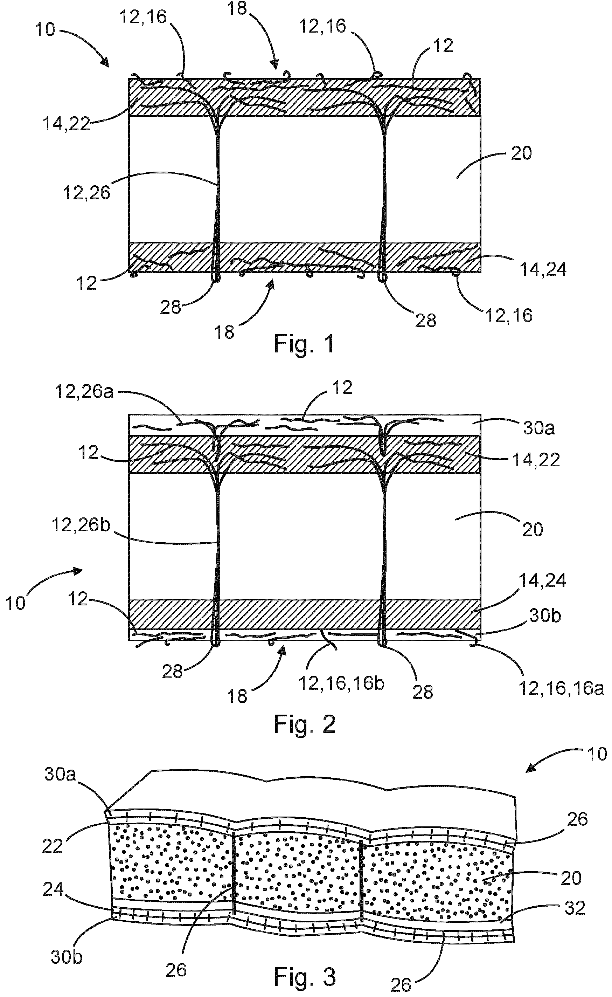

Die Fig. 1 zeigt einen geotextilen Lagenverbund 10, welcher als Abdichtungslage im Wasserbau, insbesondere für den Damm- und Deichbau, eingesetzt werden kann. Der geotextile Lagenverbund 10 weist zwei Fasern umfassende Außenschichten 14 auf. Bei den an der jeweiligen Oberfläche der Fasern umfassenden Außenschichten 14 befindlichen Fasern 12 handelt es sich um thermisch behandelte Fasern 16, welche eine Oberflächenstruktur mit erhöhter Reibwirkung 18 erzeugen. Zwischen den beiden Fasern umfassenden Außenschichten 14 befindet sich eine Materialschicht 20. Die oberhalb der Materialschicht 20 befindliche Fasern umfassende Außenschicht 14 ist als Decklage 22 ausgebildet. Die unterhalb der Materialschicht 20 befindliche Fasern umfassende Außenschicht 14 ist als Trägerlage 24 ausgebildet.

Von der Decklage 22 aus, durch die Materialschicht 20 hindurch und hin zur Trägerlage 24 erstrecken sich Vernadelungsfasern 26, welche die Decklage 22 mit der Trägerlage 24 vernadeln und die zwischen Decklage 22 und Trägerlage 24 befindliche Materialschicht 20 in ihrer Position stabilisiert. Unterhalb der Trägerlage 24 ragen die Vernadelungsfasern 26 aus der Trägerlage 24 als Faserbögen 28 heraus.

Die Fasern 12 umfassen Chemiefasern und liegen in einer Fasermischung vor, wobei 50 % der Fasern 12 eine erste Faserlänge und 50 % der Fasern 12 eine zweite Faserlänge aufweisen. Die erste Faserlänge ist kürzer ist als die zweite Faserlänge. Die Fasern 12 der ersten Faserlänge sind zu kurz, um die Decklage 22 mit der Trägerlage 24 zu vernadeln. Die Fasern 12 der zweiten Faserlänge sind lang genug, um die Decklage 22 mit der Trägerlage 24 zu vernadeln. Die Vernadelungsfasern 26 weisen die zweite Faserlänge auf. Die thermisch behandelten Fasern 16 wurden mit Infrarotlicht thermisch behandelt. Die thermisch behandelten Fasern 16 sind verkürzt gegenüber den Fasern 12, welche nicht thermisch behandelt wurden. Die thermisch behandelten Fasern 16 weisen untereinander eine erhöhte Haftung auf relativ zu der Haftung von Fasern 12 untereinander, welche nicht thermisch behandelt wurden. Dadurch, dass sich thermisch behandelten Fasern 16 sowohl an der der Materialschicht 20 abgewandten Oberfläche der Decklage 22 als auch an der der Materialschicht 20 abgewandten Oberfläche der Trägerlage 24 befinden, weisen sowohl die Decklage 22 als auch die Trägerlage 24 an der der Materialschicht 20 abgewandten Seite eine Oberflächenstruktur mit erhöhter Reibwirkung 18 auf.

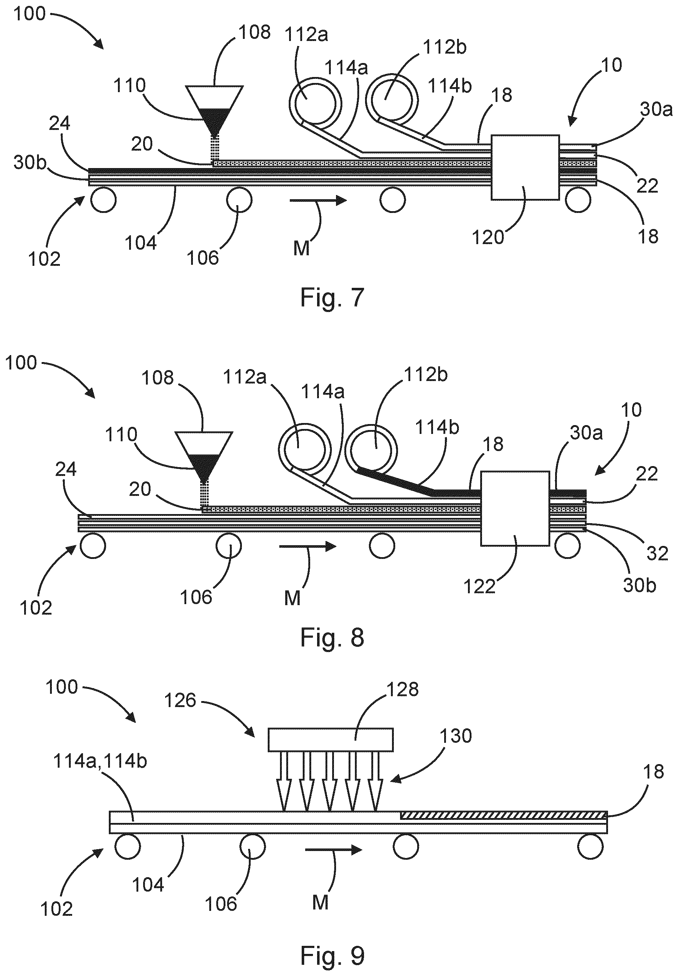

Die Materialschicht 20 umfasst rieselfähiges Tonmineral, insbesondere Bentonit. Die Decklage 22 und die Trägerlage 24 umfassen Vliesstoff und weisen dieselbe Art von Fasern 12 auf. Die Decklage 22 weist eine höhere Schichtdicke auf als die Trägerlage 24. Die Decklage 22 weist eine geringere Schichtdicke auf als die Materialschicht 20. Die Länge der Faserbögen 28 ist durch die Einstechtiefe der Nadeln einer Vernadelungseinheit 120 (vgl. Fig. 7) einer Anlage 100 zum Herstellen eines geotextilen Lagenverbundes 10 im Vernadelungsprozess einstellbar.

Die Fig. 2 zeigt einen geotextilen Lagenverbund 10, welcher als Abdichtungslage im Deponiebau eingesetzt werden kann. Der geotextile Lagenverbund 10 weist zwei Fasern umfassende Außenschichten 14 auf. Zwischen den beiden Fasern umfassenden Außenschichten 14 befindet sich eine Materialschicht 20. Die oberhalb der Materialschicht 20 befindliche Fasern umfassende Außenschicht 14 umfasst Fasern 12 und ist als Decklage 22 ausgebildet. Die unterhalb der Materialschicht 20 befindliche Fasern umfassende Außenschicht 14 ist als Trägerlage 24 ausgebildet. Die Decklage 22 ist an der von der Materialschicht 20 abgewandten Seite von einer Fasern 12 umfassenden decklagenseitigen Zusatzschicht 30a bedeckt. Die Trägerlage 24 ist an der von der Materialschicht 20 abgewandten Seite von einer Fasern 12 umfassenden trägerlagenseitigen Zusatzschicht 30b bedeckt. Bei den an der von der Materialschicht 20 abgewandten Oberfläche der trägerlagenseitigen Zusatzschicht 30b befindlichen Fasern 12 handelt es sich um thermisch behandelte Fasern 16. Die decklagenseitige Zusatzschicht 30a ist mit der Decklage 22 mit Vernadelungsfasern 26a vernadelt, wobei die Vernadelungsfasern 26a aus der decklagenseitigen Zusatzschicht 30a stammende Fasern 12 umfassen. Zwischen der Decklage 22, der Materialschicht 20, der Trägerlage 24 und der trägerlagenseitigen Zusatzschicht 30b erstrecken sich Vernadelungsfasern 26b, welche die Decklage 22 mit der trägerlagenseitigen Zusatzschicht 30b vernadeln und die zwischen Decklage 22 und trägerlagenseitigen Zusatzschicht 30b befindliche Materialschicht 20 und Trägerlage 24 in ihren Positionen stabilisiert. Die Vernadelungsfasern 26b umfassen aus der Decklage 22 stammende Fasern 12. Auf der von der Trägerlage 24 abgewandten Seite der trägerlagenseitigen Zusatzschicht 30b ragen die Vernadelungsfasern 26 aus trägerlagenseitigen Zusatzschicht 30b als Faserbögen 28 heraus.

Die Materialschicht 20 umfasst Sand der Korngruppe 0/4 mm. Die Fasern 12 der decklagenseitigen Zusatzschicht 30a umfassen Chemiefasern, welche in einer Fasermischung vorliegen, wobei 40 % der Fasern 12 eine erste und 60 % der Fasern eine zweite Zusatzschichtfaserlänge aufweisen. Die erste Zusatzschichtfaserlänge liegt in einem Bereich zwischen 2 cm und 6 cm und die zweite Zusatzschichtfaserlänge liegt in einem Bereich zwischen 6 cm und 11 cm. Die Fasern 12 der ersten Zusatzschichtfaserlänge sind zu kurz, um die decklagenseitigen Zusatzschicht 30a mit der Decklage 22 zu vernadeln. Die Fasern 12 der zweiten Zusatzschichtfaserlänge sind lang genug, um die decklagenseitigen Zusatzschicht 30a mit der Decklage 22 zu vernadeln. Die Vernadelungsfasern 26a weisen die zweite Zusatzschichtfaserlänge auf.

Die Fasern 12 der Decklage 22 umfassen Chemiefasern, welche in einer Fasermischung vorliegen, wobei 25 % der Fasern 12 eine erste und 75 % der Fasern eine zweite Decklagenfaserlänge aufweisen. Die erste Decklagenfaserlänge liegt in einem Bereich zwischen 3 cm und 8 cm und die zweite Decklagenfaserlänge liegt in einem Bereich zwischen 9 cm und 16 cm. Die Fasern 12 der ersten Decklagenfaserlänge sind zu kurz, um die Decklage 22 mit der trägerlagenseitigen Zusatzschicht 30b zu vernadeln. Die Fasern 12 der zweiten Decklagenfaserlänge sind lang genug, um die Decklage 22 mit der trägerlagenseitigen Zusatzschicht 30b zu vernadeln. Die Vernadelungsfasern 26b weisen die zweite Decklagenfaserlänge auf.

Die Trägerlage 24 umfasst ein Gewebe und weist eine Filtrationseigenschaft auf. Die Trägerlage 24 ist mit der trägerlagenseitigen Zusatzschicht 30b stoffschlüssig und flächig verklebt.

Die Fasern 12 der trägerlagenseitigen Zusatzschicht 30b liegen in einer Fasermischung vor, wobei 20 % der Fasern 12 Naturfasern umfassen und 80 % der Fasern 12 Chemiefasern umfassen. Die an der von der Trägerlage 24 abgewandten Oberfläche der trägerlagenseitigen Zusatzschicht 30b befindlichen thermisch behandelten Fasern 16 umfassen thermisch behandelte Chemiefasern 16a und thermisch behandelte Naturfasern 16b. Die thermisch behandelten Chemiefasern 16a erzeugen eine Oberflächenstruktur mit erhöhter Reibwirkung 18.

Die Fig. 3 zeigt einen geotextilen Lagenverbund 10, welcher für den Grundwasserschutz im Straßenbau und/oder Bahnbau verwendet werden kann. Der geotextile Lagenverbund 10 umfasst eine auf der oberen, von einem Geländeabschnitt abgewandten, Seite eine Decklage 22 und eine auf der unteren, auf einem Geländeabschnitt zugewandten, Seite eine Trägerlage 24. Unterhalb der Decklage 22 befindet sich eine pastöses Bentonit umfassende Materialschicht 20, welche eine Abdichtungseigenschaft aufweist. Die Decklage 22 wird auf der von der Materialschicht 20 abgewandten Seite von einer decklagenseitigen Zusatzschicht 30a bedeckt. Zwischen der Materialschicht 20 und der Trägerlage 24 befindet sich eine ein Kunststoffmaterial umfassende Zwischenschicht 32, welche eine abdichtende Funktion aufweist. Die Trägerlage 24 wird an der von der Füllmaterial 20 abgewandten Seite von einer trägerlagenseitigen Zusatzschicht 30b bedeckt. Die Decklage 22 ist mit der decklagenseitigen Zusatzschicht 30a mittels Vernadelungsfasern 26 vernadelt.

Die Trägerlage 24 ist mit der trägerlagenseitigen Zusatzschicht 30b mittels Vernadelungsfasern 26 vernadelt. Die Decklage 22 ist mit der Trägerlage 24 derart durch Vernadelungsfasern 26 vernadelt, dass sich die Vernadelungsfasern 26 durch die Materialschicht 20 und die Zwischenschicht 32 erstrecken. Die Vernadelung der Decklage 22 mit der decklagenseitigen Zusatzschicht 30a, die Vernadelung der Trägerlage 24 mit der trägerlagenseitigen Zusatzschicht 30b und die Vernadelung der Decklage 22 mit der Trägerlage 24 erfolgt in einem Vernadelungsschritt. In diesem einen Vernadelungsschritt sticht eine Vernadelungsnadel an mehreren Stellen des geotextilen Lagenverbunds 10 jeweils durch alle Lagen des geotextilen Lageverbunds 10 und zieht Fasern 12 mit sich. Die aus der decklagenseitigen Zusatzschicht 30a mitgezogenen Fasern 12 sind die Vernadelungsfasern 26, welche die Decklage 22 mit der decklagenseitigen Zusatzschicht 30a vernadeln. Die aus der Trägerlage 24 mitgezogenen Fasern 12 sind die Vernadelungsfasern 26, welche die Trägerlage 24 mit der trägerlagenseitigen Zusatzschicht 30b vernadeln. Die aus der Decklage 22 mitgezogenen Fasern 12 sind die Vernadelungsfasern 26, welche die Decklage 22 mit der Trägerlage 24 vernadeln.

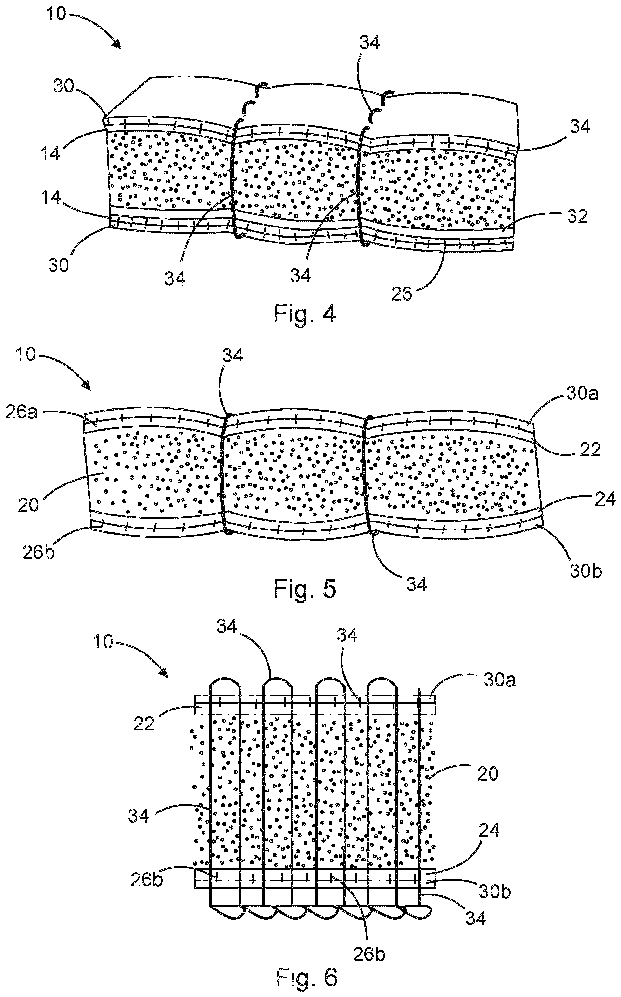

Die Fig. 4 zeigt einen geotextilen Lagenverbund 10, welcher als Oberflächenabdichtung im Bereich der Altlastensanierung eingesetzt werden kann. Der geotextile Lagenverbund 10 umfasst zwei Fasern umfassende Außenschichten 14, welche jeweils mit einer Zusatzschicht 30 mittels mehrerer Nähte 34 miteinander vernäht sind. Die beiden Zusatzschichten 30 befinden sich an den gegenüberliegenden Außenflächen des geotextilen Lagenverbundes 10. Zwischen den beiden Fasern umfassenden Außenschichten 14 befindet sich eine ein rieselfähiges Material umfassende Materialschicht 20 sowie eine Zwischenschicht 32. Die beiden Zusatzschichten 30 sind durch Nähte 34 derart miteinander vernäht, dass die Nähte 34 die Fasern umfassenden Außenschichten 14, die Materialschicht 20 und die Zwischenschicht 32 durchlaufen.

Die Fig. 5 zeigt einen geotextilen Lagenverbund 10. Die Materialschicht 20 befindet sich zwischen der Decklage 22 und der Trägerlage 24. Die Decklage 22 wird von der decklagenseitigen Zusatzschicht 30a und die Trägerlage von der trägerlagenseitigen Zusatzschicht 30b jeweils an der von der Materialschicht 20 abgewandten Seite bedeckt. Die decklagenseitige Zusatzschicht 30a ist mit der Decklage 22 über Vernadelungsfasern 26a und die trägerlagenseitige Zusatzschicht 30b mit der Trägerlage 24 über Vernadelungsfasern 26b vernadelt. Die decklagenseitige Zusatzschicht 30a und die trägerlagenseitige Zusatzschicht 30b sind miteinander über Nähte 34 vernäht, wobei die Nähte 34 die Decklage 22, die Materialschicht 20 und die Trägerlage 24 durchlaufen.

Die Fig. 6 zeigt einen geotextilen Lagenverbund 10. Die oberhalb der Materialschicht 20 befindliche Decklage 22 wird von einer decklagenseitigen Zusatzschicht 30a auf einer der Materialschicht 20 abgewandten Seite abgedeckt. Die Decklage 22 und die decklagenseitige Zusatzschicht 30a sind über Nähte 34 miteinander vernäht. Die unterhalb der Materialschicht 20 befindliche Trägerlage 24 wird von einer trägerlagenseitigen Zusatzschicht 30b auf einer der Materialschicht 20 abgewandten Seite abgedeckt. Die Trägerlage 24 und die trägerlagenseitige Zusatzschicht 30b sind über Vernadelungsfasern 26b miteinander vernadelt. Die decklagenseitige Zusatzschicht 30a ist mit der trägerlagenseitigen Zusatzschicht 30b über Nähte 34 vernäht, wobei die Nähte 34 die Decklage 22, die Materialschicht 20 und die Trägerlage 24 durchlaufen. Dadurch, dass die decklagenseitige Zusatzschicht 30a mit der trägerlagenseitigen Zusatzschicht 30b vernäht ist, wird die Materialschicht 20 in ihrer Position stabilisiert.

Die Fig. 7 zeigt eine Anlage 100 zum Herstellen eines geotextilen Lagenverbundes 10, welche eine Bereitstellungseinheit 102, bestehend aus einer Förderanlage 104 und Förderrollen 106, eine Befülleinheit 108, welche Füllmaterial 110 umfasst, Rollen 112a und 112b mit darauf aufgerolltem Decklagenausgangsmaterial 114a und Zusatzschichtausgangsmaterial 114b und eine Vernadelungseinheit 120 umfasst.

Die auf der Förderanlage 104 aufliegende trägerlagenseitige Zusatzschicht 30b und die auf der trägerlagenseitigen Zusatzschicht 30b aufliegende Trägerlage 24 werden von der Förderanlage 104 und den Förderrollen 106 in Maschinenrichtung M befördert. Die Befülleinheit 108 verteilt rieselfähiges Füllmaterial 110, insbesondere tonhaltiges Füllmaterial 110, wie beispielsweise Bentonit, flächig auf der der Förderanlage 104 abgewandten Seite der Trägerlage 24. Das von der Befülleinheit 108 auf der Trägerlage 24 verteilte Füllmaterial 110 stellt eine Materialschicht 20 dar. Das auf der Rolle 112a aufgerollte Decklagenausgangsmaterial 114a wird von der Rolle 112a abgerollt und in Maschinenrichtung M auf der der Trägerlage 24 abgewandten Seite der Materialschicht 20 abgelegt. Das auf der Materialschicht 20 abgelegte Decklagenausgangsmaterial 114a stellt eine Decklage 22 dar. Das auf der Rolle 112b aufgerollte Zusatzschichtausgangsmaterial 114b wird von der Rolle 112b abgerollt und in Maschinenrichtung M auf der der Materialschicht 20 abgewandten Seite der Decklage 22 abgelegt. Das auf der Decklage 22 abgelegte Zusatzschichtausgangsmaterial 114b stellt eine decklagenseitige Zusatzschicht 30a dar. Die aufeinander liegende trägerlagenseitige Zusatzschicht 30b, Trägerlage 24, Materialschicht 20, Decklage 22 und decklagenseitige Zusatzschicht 30a werden von der Vernadelungseinheit 120 flächig zu einem geotextilen Lagenverbund 10 vernadelt.

Die auf der Förderanlage 104 aufliegende trägerlagenseitige Zusatzschicht 30b umfasst Chemiefasern und weist auf der der Förderanlage 104 zugewandten Seite eine Oberflächenstruktur mit erhöhter Reibwirkung 18 auf. Diese Oberflächenstruktur mit erhöhter Reibwirkung 18 umfasst thermisch behandelte Fasern. Die Rollen 112a, 112b umfassen Metall. Das Decklagenausgangsmaterial 114a umfasst vernadelbaren Vliesstoff. Das Zusatzschichtausgangsmaterial 114b umfasst thermisch behandelte Fasern 16, wodurch die Zusatzschicht 30a auf der der Materialschicht 20 abgewandten Seite eine Oberflächenstruktur mit erhöhter Reibwirkung 18 aufweist.

Die Fig. 8 zeigt eine Anlage 100 zum Herstellen eines geotextilen Lagenverbundes 10, welche eine Bereitstellungseinheit 102, bestehend aus Förderrollen 106, eine Befülleinheit 108, welche Füllmaterial 110 umfasst, Rollen 112a und 112b mit darauf aufgerolltem Decklagenausgangsmaterial 114a und Zusatzschichtausgangsmaterial 114b und eine Vernähungseinheit 122 umfasst.

Die auf den Förderrollen 106 aufliegende trägerlagenseitige Zusatzschicht 30b, die auf der trägerlagenseitigen Zusatzschicht 30b aufliegende Zwischenschicht 32 und die auf der Zwischenschicht 32 aufliegende Trägerlage 24 werden durch die Förderrollen 106 in Maschinenrichtung M befördert. Die Befülleinheit 108 verteilt Füllmaterial 110, insbesondere pastöses Füllmaterial 110, flächig auf der der Zwischenschicht 32 abgewandten Seite der Trägerlage 24. Das von der Befülleinheit 108 auf der Trägerlage 24 verteilte Füllmaterial 110 stellt eine Materialschicht 20 dar. Das auf der Rolle 112a aufgerollte Decklagenausgangsmaterial 114a wird von der Rolle 112a abgerollt und in Maschinenrichtung M auf der der Trägerlage 24 abgewandten Seite der Materialschicht 20 abgelegt. Das auf der Materialschicht 20 abgelegte Decklagenausgangsmaterial 114a stellt eine Decklage 22 dar. Das auf der Rolle 112b aufgerollte Zusatzschichtausgangsmaterial 114b wird von der Rolle 112b abgerollt und in Maschinenrichtung M auf der der Materialschicht 20 abgewandten Seite der Decklage 22 abgelegt. Das auf der Decklage 22 abgelegte Zusatzschichtausgangsmaterial 114b stellt eine decklagenseitige Zusatzschicht 30a dar. Die aufeinander liegenden trägerlagenseitige Zusatzschicht 30b, Zwischensicht 32, Trägerlage 24, Materialschicht 20, Decklage 22 und decklagenseitige Zusatzschicht 30a werden von der Vernähungseinheit 122 zu einem geotextilen Lagenverbund 10 vernäht.

Das Zusatzschichtausgangsmaterial 114b weist auf der der Decklage abgewandten Seite eine Oberflächenstruktur mit erhöhter Reibwirkung 18 auf, welche durch thermisches Behandeln, insbesondere durch eine Infratotlichtquelle, der Fasern der decklagenseitigen Zusatzschichtausgangsmaterials 114b erzeugt wurde.

Die Fig. 9 zeigt einen Teilbereich einer Anlage 100 zum Herstellen eines geotextilen Lagenverbundes 10, welche eine Bereitstellungseinheit 102, bestehend aus einer Förderanlage 104 und Förderrollen 106, und eine thermische Behandlungseinrichtung 126 umfasst. Auf der Förderanlage 104 liegt ein Fasern umfassendes Decklagenausgangsmaterial 114a oder ein Fasern umfassendes Zusatzschichtausgangsmaterial 114b auf. Die thermische Behandlungseinrichtung 126 umfasst zumindest eine Infrarotlichtquelle 128, welche Infrarotlicht 130 erzeugt.

Das Decklagenausgangsmaterial 114a oder das Zusatzschichtausgangsmaterial 114b wird durch die Förderanlage 104 in Maschinenrichtung M befördert und während der Beförderung mit Infrarotlicht 130 der Infrarotlichtquelle 128 bestrahlt, wobei die Fasern an der Oberfläche des Decklagenausgangsmaterials 114a oder des Zusatzschichtausgangsmaterials 114b angeschmolzen und/oder aufgeschmolzen werden. Durch das Anschmelzen und/oder Aufschmelzen der Fasern weist das Decklagenausgangsmaterial 114a oder das Zusatzschichtausgangsmaterials 114b eine Oberflächenstruktur mit erhöhter Reibwirkung 18 auf.

### Bezugszeichen

- 10: Geotextiler Lagenverbund
- 12: Fasern
- 14: Fasern umfassende Außenschicht
- 16: thermisch behandelte Fasern
- 16a: thermisch behandelte Chemiefasern
- 16b: thermisch behandelte Naturfasern
- 18: Oberflächenstruktur mit erhöhter Reibwirkung
- 20: Materialschicht
- 22: Decklage
- 24: Trägerlage
- 26, 26a, 26b: Vernadelungsfasern
- 28: Faserbögen
- 30: Zusatzschicht
- 30a: decklagenseitige Zusatzschicht
- 30b: trägerlagenseitige Zusatzschicht
- 32: Zwischenschicht
- 34: Nähte

- 100: Anlage zum Herstellen eines geotextilen Lagenverbundes
- 102: Bereitstellungseinheit
- 104: Förderanlage
- 106: Förderrollen
- 108: Befülleinheit
- 110: Füllmaterial
- 112a, 112b: Rolle
- 114a: Decklagenausgangsmaterial
- 114b: Zusatzschichtausgangsmaterial
- 120: Vernadelungseinheit
- 122: Vernähungseinheit
- 124: Außenschichtausgangsmaterial
- 126: thermische Behandlungseinrichtung
- 128: Infrarotlichtquelle
- 130: Infrarotlicht

- M: Maschinenrichtung

## Patentansprüche

1. Geotextiler Lagenverbund (10), insbesondere zum Abdichten von Geländeabschnitten und/oder zur Schadstofffiltration, mit
- zumindest einer Fasern umfassenden Außenschicht (14);
**dadurch gekennzeichnet, dass** die zumindest eine Außenschicht (14) durch thermisch behandelte Fasern (16) eine Oberflächenstruktur mit erhöhter Reibwirkung (18) aufweist.

2. Geotextiler Lagenverbund (10) nach Anspruch 1,
**dadurch gekennzeichnet, dass** die thermisch behandelten Fasern (16) der zumindest einen Außenschicht (14) aufgeschmolzen und/oder angeschmolzen sind.

3. Geotextiler Lagenverbund (10) nach Anspruch 1 oder 2,
**dadurch gekennzeichnet, dass** die thermisch behandelten Fasern (16) der Außenschicht (14) mittels Infrarotlicht (130) thermisch behandelt sind.

4. Geotextiler Lagenverbund (10) nach einem der vorstehenden Ansprüche, **dadurch gekennzeichnet, dass** die Außenschicht (14) über zumindest 50%, vorzugsweise über zumindest 90%, der Fläche durch thermisch behandelte Fasern (16) eine Oberflächenstruktur mit erhöhter Reibwirkung (18) aufweist.

5. Geotextiler Lagenverbund (10) nach einem der vorstehenden Ansprüche, **gekennzeichnet durch** zumindest zwei Fasern umfassende Außenschichten (14), wobei die zumindest zwei Außenschichten (14) jeweils durch thermisch behandelte Fasern (16) eine Oberflächenstruktur mit erhöhter Reibwirkung (18) aufweisen.

6. Geotextiler Lagenverbund (10) nach einem der vorstehenden Ansprüche, **gekennzeichnet durch** eine Decklage (22) und eine Trägerlage (24), wobei zwischen der Decklage (22) und der Trägerlage (24) eine, insbesondere rieselfähiges, Füllmaterial umfassende Materialschicht (20) angeordnet ist.

7. Geotextiler Lagenverbund (10) nach Anspruch 6,
**dadurch gekennzeichnet, dass**
- zumindest eine Außenschicht (14), welche durch thermisch behandelte Fasern (16) eine Oberflächenstruktur mit erhöhter Reibwirkung (18) aufweist, durch die Decklage (22) gebildet wird; und/oder
- zumindest eine Außenschicht (14), welche durch thermisch behandelte Fasern (16) eine Oberflächenstruktur mit erhöhter Reibwirkung (18) aufweist, durch die Trägerlage (24) gebildet wird.

8. Geotextiler Lagenverbund (10) nach Anspruch 6,
**dadurch gekennzeichnet, dass**
- zumindest eine Außenschicht (14), welche durch thermisch behandelte Fasern (16) eine Oberflächenstruktur mit erhöhter Reibwirkung (18) aufweist, durch eine auf der der Materialschicht (20) abgewandten Seite der Decklage (22) verlaufende decklagenseitige Zusatzschicht (30) gebildet wird; und/oder
- zumindest eine Außenschicht (14), welche durch thermisch behandelte Fasern (16) eine Oberflächenstruktur mit erhöhter Reibwirkung (18) aufweist, durch eine auf der der Materialschicht (20) abgewandten Seite der Trägerlage (24) verlaufende trägerlagenseitige Zusatzschicht (30) gebildet wird.

9. Geotextiler Lagenverbund (10) nach Anspruch 8,
**dadurch gekennzeichnet, dass** die Decklage (22) und/oder die Trägerlage (24) Fasern (12) umfassen, wobei die Fasern (12) der Decklage (22) und/oder der Trägerlage (24) länger sind als die Fasern (12) der Zusatzschicht (30).

10. Geotextiler Lagenverbund (10) nach einem der Ansprüche 6 bis 9,
**gekennzeichnet durch** eine Zwischenschicht (32), welche zwischen der Materialschicht (20) und der Decklage (22) oder zwischen der Materialschicht (20) und der Trägerlage (24) angeordnet ist.

11. Geotextiler Lagenverbund (10) nach einem der vorstehenden Ansprüche, **dadurch gekennzeichnet, dass** die zumindest eine Außenschicht (14) einen Vliesstoff umfasst oder als Vliesstoff ausgebildet ist.

12. Geotextiler Lagenverbund (10) nach einem der Ansprüche 6 bis 11,
**dadurch gekennzeichnet, dass**
- die Decklage (22) mit der Trägerlage (24) vernadelt ist; und/oder
- die Decklage (22) mit zumindest einer Zusatzschicht (30) vernadelt ist; und/oder
- die Trägerlage (24) mit zumindest einer Zusatzschicht (30) vernadelt ist; und/oder
- die Decklage (22) mit zumindest einer Zwischenschicht (32) vernadelt ist; und/oder
- die Trägerlage (24) mit zumindest einer Zwischenschicht (32) vernadelt ist.

13. Geotextiler Lagenverbund (10) nach einem der Ansprüche 6 bis 12,
**dadurch gekennzeichnet, dass**
- die Decklage (22) mit der Trägerlage (24) vernäht ist; und/oder
- die Decklage (22) mit zumindest einer Zusatzschicht (30) vernäht ist; und/oder
- die Trägerlage (24) mit zumindest einer Zusatzschicht (30) vernäht ist; und/oder
- die Decklage (22) mit zumindest einer Zwischenschicht (32) vernäht ist; und/oder
- die Trägerlage (24) mit zumindest einer Zwischenschicht (32) vernäht ist.

14. Geotextiler Lagenverbund (10) nach Anspruch 10,
**dadurch gekennzeichnet, dass** zumindest zwei Schichten ausgewählt aus der Gruppe bestehend aus: Trägerlage (24), Decklage (22), Materialschicht (20), Zusatzschicht (30), Zwischenlage unterschiedliche Schichtdicken aufweisen.

15. Anlage (100) zum Herstellen eines geotextilen Lagenverbundes (10), insbesondere eines geotextilen Lagenverbundes (10) nach einem der vorstehenden Ansprüche, mit
- einer Bereitstellungseinheit (102) zum Bereitstellen einer Fasern (12) umfassenden Schicht oder eines geotextilen Lagenverbundes (10) mit zumindest einer Fasern umfassenden Außenschicht (14);
**gekennzeichnet durch** eine thermischen Behandlungseinrichtung (126), welche dazu eingerichtet ist, Fasern (12) der Fasern (12) umfassenden Schicht oder Fasern (12) der zumindest einen Fasern umfassenden Außenschicht (14) des geotextilen Lagenverbundes (10) zur Erzeugung einer Oberflächenstruktur mit erhöhter Reibwirkung (18) thermisch zu behandeln.

16. Anlage (100) nach Anspruch 15,
**dadurch gekennzeichnet, dass** die thermische Behandlungseinrichtung (126) dazu eingerichtet ist, Fasern (12) der Fasern (12) umfassenden Schicht oder Fasern (12) der zumindest einen Fasern umfassenden Außenschicht (14) des geotextilen Lagenverbundes (10) aufzuschmelzen und/oder anzuschmelzen.

17. Anlage (100) nach Anspruch 15 oder 16,
**dadurch gekennzeichnet, dass** die thermische Behandlungseinrichtung (126) eine Infrarotlichtquelle (128) zur Erzeugung von Infrarotlicht (130) umfasst.

18. Verfahren zum Herstellen eines geotextilen Lagenverbundes (10), insbesondere eines geotextilen Lagenverbundes (10) nach einem der vorstehenden Ansprüche, mit dem Schritt:
- Bereitstellen einer Fasern (12) umfassenden Schicht oder eines geotextilen Lagenverbundes (10) mit zumindest einer Fasern umfassenden Außenschicht (14);
**gekennzeichnet durch** den Schritt:
- thermisches Behandeln der Fasern (12) der Fasern (12) umfassenden Schicht oder der Fasern (12) der zumindest einen Fasern umfassenden Außenschicht (14) des geotextilen Lagenverbundes (10) zur Erzeugung einer Oberflächenstruktur mit erhöhter Reibwirkung (18).

19. Verfahren nach Anspruch 18,
**dadurch gekennzeichnet, dass** die Fasern (12) der Fasern (12) umfassenden Schicht oder die Fasern (12) der zumindest einen Fasern umfassenden Außenschicht (14) des geotextilen Lagenverbundes (10) durch das thermische Behandeln aufgeschmolzen und/oder angeschmolzen werden.

20. Verfahren nach Anspruch 18 oder 19,
**dadurch gekennzeichnet, dass** das thermische Behandeln der Fasern (12) der Fasern (12) umfassenden Schicht oder der Fasern (12) der zumindest einen Fasern umfassenden Außenschicht (14) des geotextilen Lagenverbundes (10) mittels Infrarotlicht (130) erfolgt.

21. Verfahren nach einem der Ansprüche 18 bis 20,
**gekennzeichnet durch** zumindest einen der Schritte:
- Vernadeln von zumindest zwei Schichten des geotextilen Lagenverbundes (10) miteinander;
- Vernähen von zumindest zwei Schichten des geotextilen Lagenverbundes (10) miteinander.
